# EUROPEAN PATENT SPECIFICATION

(11) **EP 2 564 955 B1**
(45) Date of publication and mention of the grant of the patent: **16.12.2015**
(21) Application number: 11775027.3
(22) Date of filing: 27.04.2011
(51) Int. Cl.: B22F 3/22, B22F 3/10, B29C 45/00, B29K 105/22, B22F 1/00, B22F 9/04, C22C 19/07, C23C 24/08

(54) **PROCESS FOR PRODUCTION OF ELECTRODE TO BE USED IN DISCHARGE SURFACE TREATMENT**
HERSTELLUNGSVERFAHREN FÜR ELEKTRODE ZUR ANWENDUNG IN EINER OBERFLÄCHENENTLADUNGSBEHANDLUNG
PROCESSUS DE PRODUCTION D'ELECTRODE À UTILISER DANS UN TRAITEMENT DE SURFACE PAR DÉCHARGE

(30) Priority: 13.05.2010 JP 2010111008; 28.04.2010 JP 2010104090
(43) Date of publication of application: 06.03.2013
(73) Proprietor: IHI Corporation, Tokyo 135-8710 (JP)
(72) Inventor: YOSHIZAWA, Hiroki, Tokyo 135-8710 (JP); WATANABE, Mitsutoshi, Tokyo 135-8710 (JP); OCHIAI, Hiroyuki, Tokyo 135-8710 (JP); SHIMODA, Yukihiro, Tokyo 135-8710 (JP); NOMURA, Kyouhei, Tokyo 135-8710 (JP); KUBUSHIRO, Keiji, Tokyo 135-8710 (JP)
(74) Representative: Lamb, Martin John Carstairs
(86) International application number: PCT/JP2011/060212
(87) International publication number: WO 2011/136246

(56) References cited:
- JP-A- 8 302 401
- JP-A- 2006 212 727
- JP-A- 2006 212 727
- JP-A- 2010 019 608
- US-A- 5 689 796
- US-A- 5 950 063
- KANKAWA YOSHIMITSU: "Effects of polymer decomposition behavior on thermal debinding process in metal injection molding", MATERIALS AND MANUFACTURING PROCESSES, MARCEL DEKKER, NEW YORK, NY, US, vol. 12, no. 4, 1 July 1997 (1997-07-01), pages 681-690, XP008093670, ISSN: 1042-6914, DOI: 10.1080/10426919708935175

## Description

### TECHNICAL FIELD

The present invention relates to a method of producing an electrode applicable to a discharge surface treatment which employs electric discharge to form a coating on a subject body.

### BACKGROUND ART

To bring a non-exhaustible electrode close to a subject body in oil or in the air and then generate electric discharge therebetween may result in machining of the subject body. This art is generally referred to as electric spark machining, which enables precise and complex machining. Under considerable conditions, e.g. a condition in which an exhaustible electrode such as a green pellet is used instead of a non-exhaustible electrode, wear of the electrode preferentially occurs instead of machining of the subject body. Constituents of the electrode or its reaction products then cover a region opposed to the electrode on the subject body, thereby enabling surface treatment of the subject body. This art is sometimes referred to as "discharge surface treatment".

How to produce an exhaustible electrode is an issue. A compressed powder body which is formed by compressing metal powder is promising as an electrode applicable to discharge surface treatment, because bonding among powder particles is weak enough to allow collapse of the body in electric discharge and it can, on the other hand, have considerable electric conductivity. If the bonding is too weak, however, it may give rise to a problem with difficulty in handling.

PTL 1 discloses a method in which metal powder, metal alloy powder, or powder of any ceramic is processed with compression forming and thereafter heated to produce a compressed body electrode.

### [Citation List]

### [Patent Literature]

[PTL 1]: Japanese Patent Application Laid-open No. 2006-212727

Reference is also made to US5689796 and US5950063.

### DISCLOSURE OF INVENTION

Compression forming is adapted for forming an electrode of a simple shape such as a column. Electrodes applied to discharge surface treatment, however, frequently requires complex shapes according to shapes of subject bodies. More specifically, any formation method with a greater degree of freedom in shape is desirable and injection forming is superior in this point. Injection forming is inherently a method for producing a dense sintered article. It is difficult to employ injection molding to obtain an exhaustible electrode.

The present invention is intended to provide a method for obtaining an exhaustible electrode although it employs injection molding.

The present invention provides a method for producing an electrode applicable to discharge surface treatment, as set out in claim 1.

### BRIEF DESCRIPTION OF DRAWINGS

FIG. 1 is a perspective view showing an example of an electrode applied to discharge surface treatment, by which a turbine rotor blade is treated with discharge surface treatment.
FIG. 2A is a schematic drawing depicting a step of kneading a composition in production of the electrode in accordance with an embodiment of the present invention.
FIG. 2B is a schematic drawing depicting a step of injecting the composition into a molding in the production.
FIG. 3A is a schematic drawing depicting a step of degreasing the green body in the production.
FIG. 3B is a schematic drawing depicting a step of sintering the green body in the production.
FIG. 4A is a schematic drawing depicting a step of eluting the wax by means of a solvent in the production.
FIG. 4B is a schematic drawing depicting a step of processing the green body with isostatic forming in the production.

### BEST MODE FOR CARRYING OUT THE INVENTION

An embodiment will be described hereinafter with reference to the appended drawings.

Throughout the present specification and the appended claims, the term "discharge surface treatment" is defined and used as an act of applying an exhaustible electrode instead of a non-exhaustible electrode, utilizing electric discharge in an electric spark machine to consume the electrode instead of machining a workpiece, and adhering a material constituting the electrode, or a reaction product between the material constituting the electrode and a processing liquid or a processing gas, onto the workpiece.

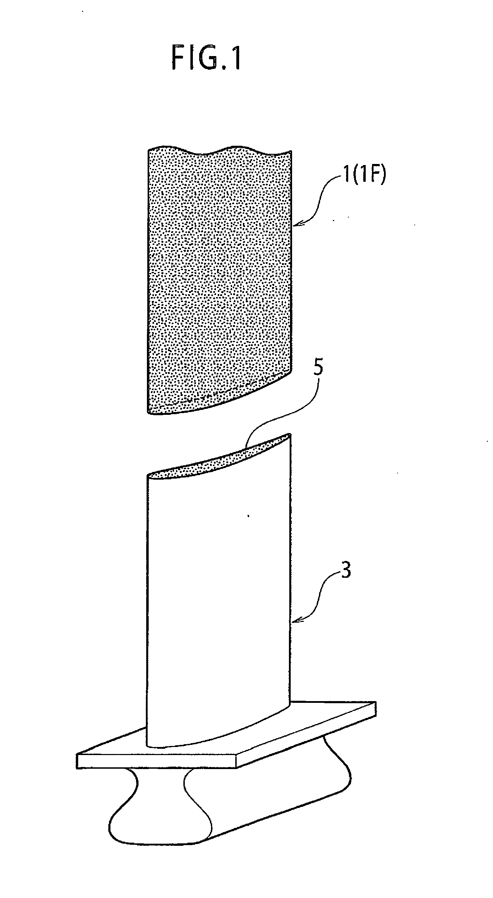

Referring to FIG. 1, in discharge surface treatment, an exhaustible electrode 1 is made close to a subject body 3 and pulsed electric power is applied between the electrode 1 and the subject body 3 to generate a discharge. As the discharge causes the electrode 1 to gradually wear, a material escaping from the electrode 1 builds up on the subject body 3 to form a coating 5. The discharge surface treatment can be executed in the air or alternatively in a proper liquid such as mineral oil. A turbine rotor blade as shown in the drawing, or various conductive machine components, can be the subject of the discharge surface treatment.

The exhaustible electrode 1 is produced from a powder 7 consisting of an electrically conductive mixed matter, being metal or a metal and ceramic.

To the powder 7 preferably applied is a powder having a feature with which a sintered body therefrom leaves pores after sintering. Spherical particles are in contact with adjacent particles at limited points and therefore their aggregation has a relatively low bulk density and is slow in progress of sintering. Thus, after proper sintering, its sintered body is likely to leave pores therein. Consequently, powder of spherical particles is advantageous in giving exhaustibility to a sintered body. Therefore a first powder 7a of spherical particles is made contained in the powder 7. As a production method of the spherical powder 7a, an atomizing method, a reduction method, and a carbonyl method, all of which are already known, can be exemplified.

In the atomizing method, an ingredient is fused by any melting means such as an induction furnace or a gas furnace and then flows out of a nozzle, and a jet stream of water or inert gas blows it so as to produce droplets, which will solidify to form a powder. In the reduction method, an oxide or chloride of a metal is reacted with a reduction agent such as hydrogen or carbon monoxide and then reduced, thereby forming a powder of the metal. In the carbonyl method, a metal carbonyl is reacted with a reduction agent such as hydrogen or carbon monoxide and then reduced, thereby forming a powder of the metal. Any of these methods produces a powder of a spherical shape or a shape of joined spheres in general, which is adapted for producing the exhaustible electrode 1. In addition, such a powder may be available in the commercial market. The average particle size may be regulated by any proper means such as classification.

Further preferably, a powder effective in preventing a sintered body from developing cracks is made included in the powder 7. As such a powder, a scale-like powder 7b produced by a known crushing method for example can be exemplified.

In the crushing method, an ingredient is mechanically crushed by a ball mill, a bead mill, or a jet mill, thereby producing scale-like particles. Alternatively, if possible, any other method can be applied to producing the powder 7b of scale-like particles. In addition, such a powder may be available in the commercial market. The average particle size may be regulated by any proper means such as classification.

More specifically, preferably, a mixed matter of the spherical powder 7a and the scale-like powder 7b is used as the powder 7. As smaller average particle sizes are advantageous in light of quality of sintering, the average particle size of the powder 7 is preferably 5 µm or less, more preferably 3 µm.

In view of prevention of crack' formation in a sintered body, greater ratios of the scale-like powder 7b are advantageous. On the other hand, in view of flowability of the mixed matter, smaller ratios of the scale-like powder 7b are advantageous. Therefore the ratio of the scale-like powder 7b to the whole of the powder 7 as the mixed matter is 10-65 weight%.

The powder 7 is kneaded along with a proper binder 9 and is thereafter applied to injection molding. To the binder 9 applicable is any substance capable of supporting the powder 7, exhibiting flowability at high temperatures, and being a solid substance at low temperatures so as to retain a definite shape, and further being removable by any means such as a solvent or heat. As such a binder, a proper wax or a proper synthetic resin, or a mixture thereof, can be exemplified. In addition, a binder adapted for injection molding may be available in the commercial market.

As the wax, fatty esters, fatty amides, phthalate esters, paraffin waxes, microcrystalline waxes, polyethylene waxes, polypropylene waxes, carnauba waxes, montan waxes, urethane waxes, maleic anhydride denatured waxes, and polyglycol compounds can be exemplified but are not limiting. Preferably, a mixture of a wax 9a and a synthetic resin 9b is applied to the binder 9. Further, a lubricant such as stearic acids may be included.

Smaller ratios of the binder 9 in the mixture of the powder 7 and the binder 9 are advantageous in light of prevention of crack formation in a sintered body, and greater ratios are advantageous in light of assuring sufficient flowability of the mixture. Therefore the ratio of the binder 9 to the whole of the mixed matter is preferably 47.5-75 volume%, and further preferably 47.5-55 volume%. As isostatic pressure forming as described later is executed, crack formation is likely to be prevented even if the ratio of the binder 9 is beyond 55 volume%.

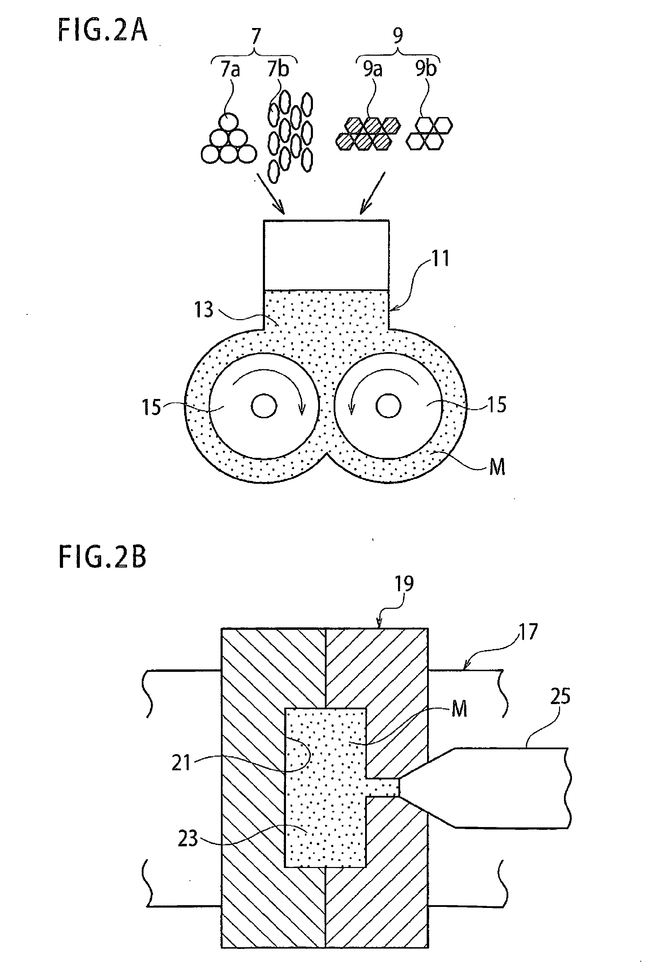

The electrically conductive powder 7 and the binder 9 as described above are heated up to from 100 to 150 degrees C for example so as to exhibit proper viscosity, and are put in a kneading chamber 13 of a known kneading machine 11 exemplarily shown in FIG. 2A. By rotating a rotor 15, the powder 7 and the binder 9 are kneaded, thereby forming a kneaded composition M.

Any known machine is applicable to an injection molding machine 17. Referring to FIG. 2B, the injection molding machine 17 is comprised of a mold 19 communicating with a runner 25. The mold 19 is in general dividable into two or more components and, when assembled, its internal face 21 defines a cavity 23. The cavity 23 has a shape complementary to the shape of the electrode 1. Alternatively, it may be properly made larger in a ratio of about 0-10% as compared with the electrode 1, in view of expected contraction by sintering. The injection molding machine 17 is, to bear injection pressure, comprised of a hydraulic cylinder for pressurizing the mold 19.

To give sufficient flowability, the composition M is heated up to from 160 to 200 degrees C and is, under pressure about 100 MPa, injected through the runner 25 into the mold 19. The mixed matter is filled in the cavity 23 of the mold 19 without leaving any room, thereby being formed. After proper cooling, a solid green body 1F is obtained.

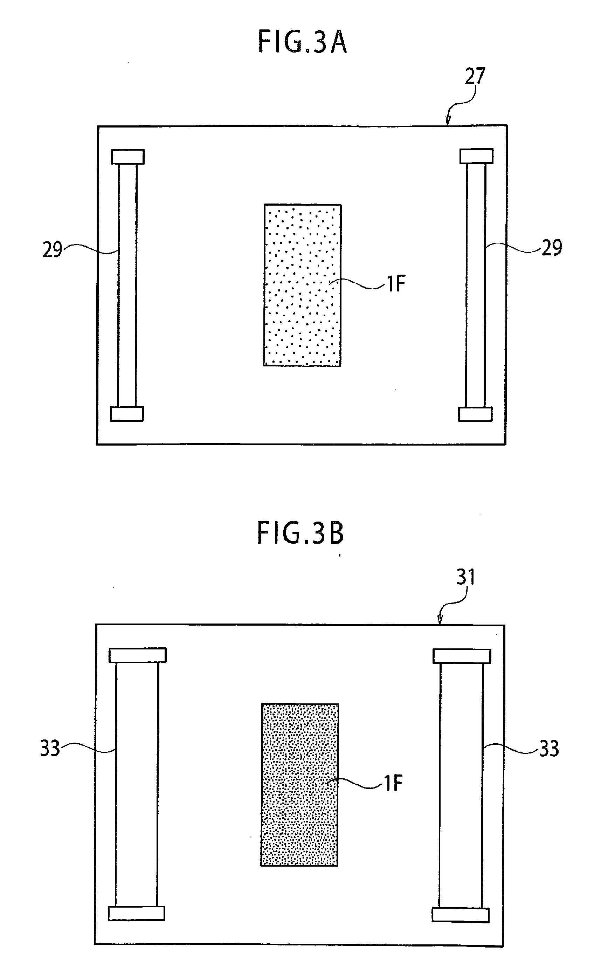

To remove the binder 9 from the obtained green body 1F, a known degreasing step is executed. The degreasing step, for example, employs a furnace 27 exemplarily shown in FIG. 3A. The green body 1F is in the furnace 27 heated by heating means such as a carbon heater 29. The interior of the furnace 27 is preferably kept at a proper depressurized state or purged by non-oxidizing gas such as nitrogen so as to produce a non-oxidizing atmosphere. To avoid thermal shock on the green body 1F during temperature increase, the rate of temperature increase can be about 0.3-2 degrees C/min for example. Alternatively, to increase efficiency of temperature increase, the rate of temperature increase can be accelerated before reaching about 70-150 degrees C and can be thereafter lowered in the higher temperature range. A proper temperature (350 degrees C for example) higher than the degreasing temperature of the wax 9a (250 degrees C for example) is kept for several hours (4-8 hours for example). Because such heating results in decomposition and dissipation of the wax 9a, the wax 9a is removed from the green body 1F.

In general, the degreasing temperature of the synthetic resin 9b is higher than the degreasing temperature of the wax 9a. Thus when the heating temperature is set lower than the former and higher than the latter, the synthetic resin 9b can be still left in the green body 1F. The residual synthetic resin 9b helps the green body 1F to keep its shape.

After completion of heating, the furnace is, while remaining being purged, cooled. The cooling rate should be properly regulated so as not to give excessive thermal shock to the green body. After sufficient cooling, nitrogen or such a gas is introduced into the furnace to place it under the atmospheric pressure, and then the green body 1F from which the wax is removed is taken out. Alternatively, without taking the green body out, the next step may be executed in the same furnace.

To remove the synthetic resin 9b, the green body 1F is further heated in the same, or the other, furnace. Under the non-oxidizing atmosphere as described above, the green body 1F is heated by any heating means such as a carbon heater 29. The rate of temperature increase may be larger than that described above, about 2-20 degrees C/min for example. A proper temperature higher than the degreasing temperature of the synthetic resin 9b (450 degrees C for example) is kept for several hours (4-8 hours for example). Because such heating results in decomposition and dissipation of the synthetic resin 9b, the synthetic resin 9b is removed from the green body 1F.

Such heating can be executed at a temperature higher than the degreasing temperature of the synthetic resin 9b and close to the sintering temperature. Keeping at this temperature results in not only removal of the synthetic resin 9b but also preliminary sintering, thereby the shape of the green body 1F is retained without a binder.

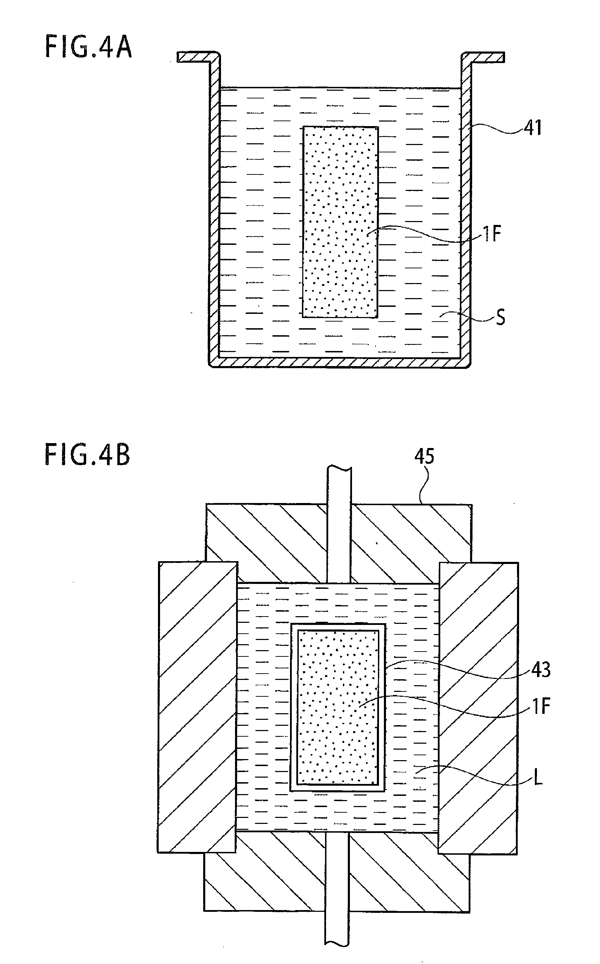

The degreasing step as described above can be executed not by heating but with any proper solvent. As shown in FIG. 4A for example, the green body 1F is immersed in a solvent S reserved in a bath 41, thereby eluting the wax therefrom. Alternatively the solvent S may be sprayed onto the green body 1F within a proper container. As the solvent S, heptane, methylene chloride and benzene can be exemplified but not limiting. To promote elution, any proper heating may be additionally executed. The whole of the bath 41 may be double-boiled for example. After proper drying, the green body 1F from which the wax is removed is applied to the sintering step.

After removing the wax, isostatic pressure forming of the green body 1F is executed. Referring to FIG.4B, the green body 1F is sealed in a properly thin rubber mold 43 and is, along therewith, introduced into a pressure vessel 45. As the pressure vessel 45 is filled with a working liquid L, when the working liquid L is pressurized, the green body 1F is isotropically pressurized. The isostatic pressure forming may be executed without heating, more specifically it may be executed as cold isostatic pressure forming (CIP). Alternatively, it may be executed as hot isostatic pressure forming (HIP) so that sintering as described later simultaneously progresses. Execution of isostatic pressure forming is advantageous in regulating density of the sintered body.

Referring to FIG. 3B, the green body 1F from which the binder is removed is introduced into a furnace 31 capable of heating up to the sintering temperature or higher. The sintering temperature is inherent in the material of the powder 7 and is lower than the melting point Tm (K), in general in the range of 0.5-0.8 Tm. The interior of the furnace 81 is preferably kept at a proper depressurized state or purged by non-oxidizing gas such as nitrogen so as to produce a non-oxidizing atmosphere. The rate of temperature increase can be about 2-20 degrees C/min for example. After it reaches a proper temperature higher than the sintering temperature, it is kept for a considerable period of time, 0.5 hours for example.

To avoid excessive sintering, the heating temperature and the time for keeping the temperature should be properly limited. Empirically, an electrode having a sintering density (obtained by a bulk density divided by an ideal density of an ideal body without pores) about 25-45 % is preferably applicable to discharge surface treatment. With reference to this sintering density, upon a finite number of experimentations, one can readily determine the heating temperature and the time for keeping the temperature. Alternatively, instead of the sintering density, one can determine the heating temperature and the time so as to have electrical resistance of the electrode 1 to be 10⁻³ Ω·cm or higher and 3 x 10⁻³ Ω·cm or lower. The electrical resistance can be an index of exhaustibility of the electrode. Meanwhile the aforementioned sintering density may be readily obtained without any special management, depending on materials.

After completion of heating, the furnace is, while remaining being purged, cooled. The cooling rate should be properly regulated so as not to give excessive thermal shock to the sintered body. After sufficient cooling, nitrogen or such a gas is introduced into the furnace to place it under the atmospheric pressure, and then the sintered electrode 1 is taken out.

According to general knowledge available to skilled persons in the art field, scale-like particles tend to get in between spherical particles and therefore promote progress of sintering. Therefore it increases the sintering density and is thus expected to be disadvantageous in production of an exhaustible electrode. Contrary to this expectation, according to the aforementioned process, the sintering density of the electrode 1 is sufficiently low and therefore has exhaustibility, thereby being applicable to discharge surface treatment. Further when the scale-like particles and the spherical particles are mixed, flowability of the mixed matter is reduced. Thus it is known hard to be applicable to injection molding. Contrary to the expectation, according to the aforementioned process, forming of the electrode 1 is enabled.

To demonstrate the effects of the present invention, the following experiments were carried out.

A spherical powder was obtained by the atomizing method from a known cobalt wear-resistant alloy. Further a scale-like powder of the same alloy was obtained by the crushing method using a ball mill. Mixed matters in which the spherical powder and the scale-like powder were mixed were respectively prepared in ratios shown in Table 1. Respectively to them, a binder composed of a carnauba wax in 40 weight%, a polypropylene in 58 weight% and a stearic acid in 2 weight% was mixed in ratios shown in Table 1, and then kneaded respectively. By injection forming, rectangular parallelepipeds of 10 x 5 x 100 mm were formed and then degreased and sintered. The respective test pieces were kept at 250 degrees C for 4 hours and further kept at 350 degrees C for 20 hours, thereby being degreased. The degreased test pieces were sintered at 800 degrees C for 10 hours.

Results of appearance observation in regard to the respective test pieces are summarized in Table 1. In Table 1, what appears not to have cracks is classified as "good" and what appears to have cracks is classified as "bad". Further what fails to form a green body is classified as "failed".

**Table 1 Applicability to sintering**

| The ratio of the scale-like powder to the whole of the mixed matter (weight%) | The ratio of the binder to the whole of the composition (volume%) | | | | | |
|---|---|---|---|---|---|---|
| | 57.5 | 55 | 52.5 | 50 | 47.5 | 45 |
| 10 | | Bad | Good | Good | Good | Failed |
| 20 | | Bad | Good | Good | Good | |
| 30 | | Bad | Good | Good | Good | |
| 40 | Bad | Good | Good | Good | Good | |
| 50 | Bad | Good | Good | Good | Failed | |
| 60 | Bad | Good | Good | Good | Failed | |
| 65 | Bad | Good | Good | Failed | Failed | |
| 70 | Bad | Failed | Failed | | | |

Further the test pieces classified as "good" were tried to apply to discharge surface treatment. Any of them was verified to successfully form a coating.

Although the invention has been described above by reference to certain embodiments of the invention, the invention is not limited to the embodiments described above. Modifications and variations of the embodiments described above will occur to those skilled in the art, in light of the above teachings.

### INDUSTRIAL APPLICABILITY

An exhaustible electrode preferably applied to discharge surface treatment is provided.

## Claims

1. A method for producing an electrode (1) applicable to discharge surface treatment, comprising:
kneading a composition (7) consisting of an electrically conductive mixed matter, the matter being metal, or a metal and ceramic, the matter consisting of a first powder (7a) of spherical particles obtained by at least any process selected from the group consisting of an atomizing method, a reduction method, and a carbonyl method and a second powder (7b) obtained by a crushing method, and a binder (9), the electrically conductive mixed matter including the second powder (7b) at a ratio of 10-65 weight %;
carrying out injection molding to inject the kneaded composition (7) into a mold (19) to produce a green body (1F) ;
degreasing the green body (1F) by heating the green body (1F) or by immersing the green body (1F) in a solvent (S) ;
processing the degreased green body (1F) with isostatic pressure forming; and
sintering the green body (1F) after the isostatic pressure forming.

2. The method of claim 1, wherein the binder (9) is mixed in the composition (7) at a ratio of 47-55 volume % to the composition.

3. The method of claim 1, further comprising:
reducing an average particle size of the mixed matter to 5 µm or less.

4. The method of claim 1, wherein the binder is mixed in the composition (7) at a ratio of 47-55 volume % to the composition.

5. The method of claim 1, wherein the binder (9) includes a wax (9a) having a first degreasing temperature and a synthetic resin (9b) having a second degreasing temperature, and the green body (1F) is heated up to the second degreasing temperature or higher in heating the green body (1F) in the step of degreasing so as to remove the binder (9) from the green body (1F).

6. The method of claim 5, further comprising:
heating the green body (1F) up to a temperature not lower than the first degreasing temperature and not higher than the second degreasing temperature before heating the green body (1F) in the step of degreasing so as to remove the wax from the green body (1F).

## Patentansprüche

1. Verfahren zur Herstellung einer Elektrode (1), die zur Entladungs-Oberflächenbehandlung anwendbar ist, umfassend:
Kneten einer Zusammensetzung (7), die aus einem elektrisch leitfähigen Mischwerkstoff besteht, wobei der Werkstoff Metall oder Metall und Keramik ist, wobei der Werkstoff aus Folgendem besteht: ein erstes Pulver (7a) aus kugelförmigen Partikeln, die durch mindestens einen Prozess erlangt werden, der aus der Gruppe ausgewählt wird, die aus einem Zerstäubungsverfahren, einem Reduktionsverfahren und einem Carbonylverfahren besteht, und ein durch ein Zerkleinerungsverfahren erlangtes zweites Pulver (7b) und ein Bindemittel (9), wobei der elektrisch leitfähige Mischwerkstoff das zweite Pulver (7b) in einem Verhältnis von 10-65 Gewichtsprozent einschließt;
Durchführen von Spritzgießen, um die geknetete Zusammensetzung (7) in eine Form (19) zu spritzen, um einen Grünling (1F) herzustellen;
Entfetten des Grünlings (1F) durch Erwärmen des Grünlings (1F) oder durch Untertauchen des Grünlings (1F) in einem Lösungsmittel (S);
Verarbeiten des entfetteten Grünlings (1F) durch isostatisches Pressen; und
Sintern des Grünlings (1F) nach dem isostatischen Pressen.

2. Verfahren nach Anspruch 1, worin das Bindemittel (9) in einem Verhältnis von 47-55 Volumenprozent der Zusammensetzung in die Zusammensetzung (7) gemischt wird.

3. Verfahren nach Anspruch 1, ferner umfassend:
Verringern einer durchschnittlichen Partikelgröße des Mischwerkstoffs auf 5 µm oder weniger.

4. Verfahren nach Anspruch 1, worin das Bindemittel in einem Verhältnis von 47-55 Volumenprozent der Zusammensetzung in die Zusammensetzung (7) gemischt wird.

5. Verfahren nach Anspruch 1, worin das Bindemittel (9) ein Wachs (9a) mit einer ersten Entfettungstemperatur und ein Kunstharz (9b) mit einer zweiten Entfettungstemperatur einschließt und der Grünling (1F) beim Erwärmen des Grünlings (1F) im Entfettungsschritt auf die zweite Entfettungstemperatur oder darüber erwärmt wird, um dadurch das Bindemittel (9) aus dem Grünling (1F) zu entfernen.

6. Verfahren nach Anspruch 5, ferner umfassend:
Erwärmen des Grünlings (1F) auf eine Temperatur, die nicht niedriger als die erste Entfettungstemperatur und nicht höher als die zweite Entfettungstemperatur ist, bevor der Grünling (1F) im Entfettungsschritt erwärmt wird, um dadurch das Wachs aus dem Grünling (1F) zu entfernen.

## Revendications

1. Procédé de production d'électrode (1) applicable à un traitement de surface par décharge, comprenant les opérations consistant à :
malaxer une composition (7) consistant en une matière mixte électroconductrice, la matière étant métallique, ou métallique et céramique, la matière consistant en une première poudre (7a) de particules sphériques, produite selon au moins l'un quelconque des procédés choisis dans le groupe consistant en un procédé d'atomisation, un procédé de réduction et un procédé au carbonyle, et une deuxième poudre (7b) produite par un procédé de broyage, et un liant (9), la matière mixte électroconductrice contenant la deuxième poudre (7b) selon un rapport de 10 à 65 % en poids ;
réaliser un moulage par injection consistant à injecter la composition malaxée (7) dans un moule (19) afin de produire un corps cru (1F) ;
dégraisser le corps cru (1F) en chauffant le corps cru (1F) ou en immergeant le corps cru (1F) dans un solvant (S) ;
traiter le corps cru (1F) dégraissé par un pressage isostatique ; et
fritter le corps cru (1F) après le pressage isostatique.

2. Procédé selon la revendication 1, dans lequel le liant (9) est mélangé à la composition (7) selon un rapport de 47 à 55 % en volume par rapport à la composition.

3. Procédé selon la revendication 1, comprenant en outre :
la réduction de la taille particulaire moyenne de la matière mixte à 5 µm ou moins.

4. Procédé selon la revendication 1, dans lequel le liant est mélangé à la composition (7) selon un rapport de 47 à 55 % en volume par rapport à la composition.

5. Procédé selon la revendication 1, dans lequel le liant (9) comporte une cire (9a) présentant une première température de dégraissage et une résine synthétique (9b) présentant une deuxième température de dégraissage, et le corps cru (1F) est chauffé à la deuxième température de dégraissage ou plus lors du chauffage du corps cru (1F) au cours de l'étape de dégraissage de manière à éliminer le liant (9) du corps cru (1F).

6. Procédé selon la revendication 5, comprenant en outre :
le chauffage du corps cru (1F) à une température non inférieure à la première température de dégraissage et non supérieure à la deuxième température de dégraissage avant de chauffer le corps cru (1F) lors de l'étape de dégraissage de manière à éliminer la cire du corps cru (1F).
